# EUROPEAN PATENT APPLICATION

(11) **EP 2 336 666 A2**
(43) Date of publication of application: **22.06.2011**
(21) Application number: 09172960.8
(22) Date of filing: 14.10.2009
(51) Int. Cl.: F24H 1/14, F24H 9/20

(54) **Electric heating device and high-speed water heater with the same**

(30) Priority: 13.04.2009 CN 200920130788 U
(71) Applicant: Beauti-Gear International Limited, Tokwawan, Kowloon, Hong Kong (CN)
(72) Inventor: Lo, Kam Tao, Tokwawan, Kowloon Hong Kong (CN)
(74) Representative: Johansson, Lars-Erik

(57) **Abstract**

The present invention discloses an electric heating device comprising a container provided with an inlet port and an outlet port and an electric heating element, in which the container is a ceramic tube, and the electric heating element comprises a resistive heating film covering an outside surface of the ceramic tube and two electrode conductors leading from the opposite ends of the resistive heating film respectively, and the ceramic tube and the resistive heating film form a film heating tube, and the device further comprises an outer tube forming an enclosed space with the ceramic tube, in which an inner surface of the outer tube forms a reflective surface for reflecting all the energy radiated from the film heating tube back to the ceramic tube. The present invention further discloses a high-speed water heater comprising a water tank, an electric heating device, a water supply system connected between the water tank and the electric heating device, a water discharge system, and a control system for controlling the operation of the water heater, and the electric heating device is a device as mentioned above. The electric heating device could heat objects with improved energy efficiency at high speed.

## Description

### FIELD OF THE INVENTION

The present invention relates to an electric heating device, particularly to an electric heating device for improving energy efficiency thereof and a high-speed water heater with the electric heating device.

### BACKGROUND OF THE INVENTION

With the environment deterioration of the earth and over-consumption of resources and energy, it becomes the most important development trend for household appliance to be of environment protection, energy efficiency and water saving. Currently, the available heating devices usually use heating wires or semiconductor materials or elements with high positive temperature coefficient (PTC) as heating units. To save energy, such kinds of heating devices are designed to have the properties of high power, low capacity and high speed. However, such designs could not improve the energy efficiency of those heating devices.

### SUMMARY OF THE INVENTION

To solve the above-mentioned problem concerning low energy efficiency of the prior heating devices, the main object of the present invention is to provide an electric heating device and a high-speed water heater.

To achieve the above object, the present invention provides an electric heating device which may comprise a container provided with an inlet port and an outlet port and an electric heating element, in which the container is a ceramic tube, and the electric heating element comprises a resistive heating film covering an outside surface of the ceramic tube and two electrode conductors leading from the opposite ends of the resistive heating film respectively, and the ceramic tube and the resistive heating film form a film heating tube, and the device further comprises an outer tube forming an enclosed space with the ceramic tube, in which an inner surface of the outer tube forms a reflective surface for reflecting all the energy radiated from the film heating tube back to the ceramic tube.

Another aspect of the present invention is to provide a high-speed water heater which may comprise a water tank for containing cold water to be boiled, an electric heating device for heating the cold water received from the water tank, a water supply system connected between the water tank and the electric heating device for supplying the cold water from the water tank to the electric heating device, a water discharge system for discharging boiled water received from the electric heating device, and a control system for controlling the operation of the water heater, in which the electric heating device is a device as mentioned above.

It is the main advantage of the present invention that the present electric heating device could reduce the waste of energy during the operation, and thus could improve the energy efficiency thereof.

### BRIEF DESCRIPTION OF THE DRAWINGS

Fig. 1 is a schematic view illustrating the structure of the electric heating device of an embodiment of the present invention;
Fig. 2 is a schematic view illustrating the structure of the film heating tube provided in the electric heating device of the embodiment of the present invention;
Fig. 3 is an energy flow diagram of the electric heating device of the embodiment of the present invention; and
Fig. 4 is a schematic view illustrating the structure of the high-speed water heater of an embodiment of the present invention.

### DETAILED DESCRIPTION OF THE INVENTION

The aspects, features and advantages of the present invention will be more apparent from the following particular description of the present invention with reference to the accompanying drawings and embodiments. It should be understood that the embodiments are for explanation only, and are not construed to the limitation of the protective scope of the present invention.

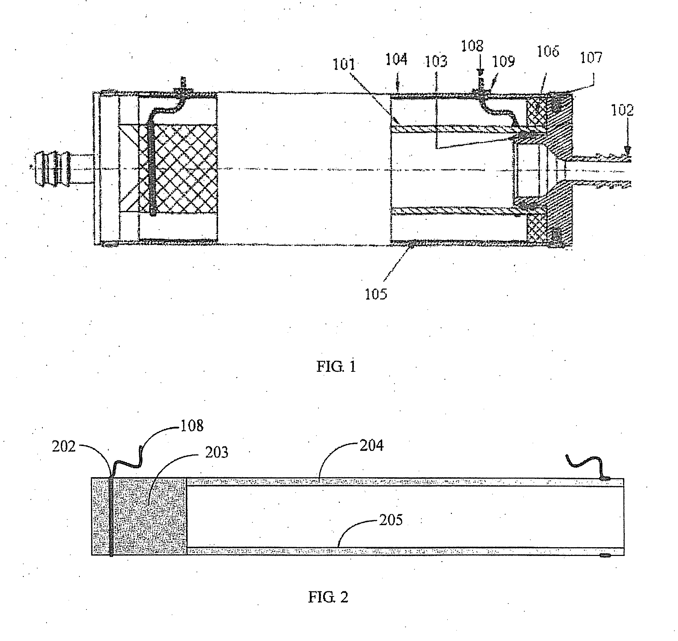

Fig. 1 illustrates the structure of the electric heating device of the present invention. For clarity, the left part of Fig. 1 illustrates the inner structure of the electric heating device, while the right part of Fig. 1 is a cross-sectional view of the device.

The electric heating device comprises a container provided with an inlet port and an outlet port and an electric heating element. In the example of Fig. 1, the container is a ceramic tube, while the electric heating element comprises a resistive heating film covering the outside surface of the ceramic tube and two electrode conductors 108 leading from the opposite ends of the resistive heating film respectively. The ceramic tube and the resistive heating film form a film heating tube 101 of the present invention. When the resistive heating film is supplied with power, thermal energy and radially-emitted infra-red energy are generated.

Furthermore, the electric heating device may further comprise an outer tube 104 forming an enclosed space with the ceramic tube, and the inner surface of the outer tube 104 forms a reflective surface 105. The reflective surface 105 may reflect all the energy radiated from the film heating tube 101 back into the ceramic tube, to centralize the energy. Therefore, the waste of energy during the operation of the present electric heating device could be reduced, while the energy efficiency thereof could be raised.

Before the operation of the electric heating device, water is first supplied into the container, i.e. the film heating tube 101, and then the two electrode conductors 108 are connected to a power source (not shown in the figures). Subsequently, the film heating tube 101 generates heat, in which about 2/3 of the energy generated from the film heating tube 101 is transferred to the water contained in the film heating tube along the wall of the ceramic tube, while about 1/3 of the energy would be diffused outwards. The reflective surface 105 surrounding the film heating tube 101 reflects the diffused energy back to the film heating tube 101. Thus, the energy efficiency of the electric heating device could be improved.

The skilled in the art should understand that the film heating tube 101 might be of any suitable shapes, provided that the film heating tube 101 could contain the liquid to be heated. For example, the film heating tube 101 is of cylinder shape, and the opposite ends thereof are provided with covers or other means to enable the film heating tube 101 to contain liquid. The outer tube 104 with the reflective surface 105 might also be of any suitable shapes, provided that it could reflect all the energy radiated from the film heating tube back to the latter. Preferably, the shape of the outer tube 104 is similar to that of the film heating tube 101, thus, the amount of materials needed for the electric heating device could be reduced. The reflective surface 105 may be formed by a smooth surface of a thin metal sheet, which could lower the weight of the reflective surface.

In the embodiment of the present invention, the film heating tube 101 is of cylinder shape, and a shock-proof ring 106 is provided between the film heating tube 101 and the outer tube 104 at each end of the cylinder, to avoid the collision between the film heating tube and the outer tube during the movement of the electric heating device. The shock-proof rings 106 could be made of silicone or any other suitable electrical insulating materials, provided that they have electrical insulation property and are not subject to damage by the heat generated by the film heating device.

The outer tube of the electric heating device might be made of steel for providing protection to the electric heating device. The electric heating device also comprises two leak-proof covers 102 made of rubber, plastics or any other suitable materials, each of which is provided at each end of the film heating tube 101. One end of each leak-proof rubber cover 102 is inserted into the film heating tube 101, and a plurality of leak-proof rings 103 are provided between the inserted end of the leak-proof cover 102 and the film heating tube 101. Furthermore, each of the leak-proof covers 102 has a hole formed therethrough for supplying cold water to or discharging boiled water from the film heating tube 101. The leak-proof rubber covers 102 could be fixed to the outer tube 104 by means of fastening elements, such as screws 107.

The outer tube 104 could be of any suitable shape, however, when the outer tube 104 tightly surrounds the film heating tube 101, the amount of the materials needed for the outer tube could be reduced.

The two electrode conductors 108 of the film heating tube 101 extend out of the outer tube 104 through respective apertures formed through the wall of the outer tube. A leak-proof plug 109 might be provided between each of the electrode conductors 108 and its respective aperture, to avoid the leakage of energy from the outer tube 104. The enclosed space between the reflective surface 105 on the inner wall of the outer tube 104 and the film heating tube 101 is in a vacuum state. Therefore, the loss of energy could be further lowered, and the energy efficiency could be raised accordingly. The skilled in the art should understand that the above-mentioned vacuum state is a relative condition with respect to the outer environment. In fact, there are still a little air and/or a few other particles in the mentioned vacuum state.

Fig. 2 illustrates the main structure of the film heating tube provided in the electric heating device of the embodiment of the present invention. The film heating tube comprises a ceramic tube 204 and a resistive heating film 203 covering the outside surface of the former. The resistive heating film 203 is coated on the outside surface of the ceramic tube 204 according to the requirements to the desired voltage, heating area, power, etc. of the electric heating device, and is made of suitable materials according to predetermined proportions.

In an embodiment of the present invention, the ceramic tube 204 is made of 99% high-purity ceramics sintered under high temperature and pressure. Thus, the ceramic tube 204 comprises aluminum oxide which has the properties of heat conduction and electrical insulation. On the inner surface of the ceramic tube 204, two layers of quartz glazed coatings 205 are formed, which has the same sintering temperature and coefficient of thermal expansion as the 99% high-purity ceramics.

The resistive heating film 203 on outside surface of the ceramic tube 204 might be comprised of several kinds of natural mineral materials, such as aluminum oxide, titanium, cadmium, nano-carbon and so on. The procedures for preparing the resistive heating film 203 are as follows. Firstly, according to the requirements to the desired voltage, heating area, power of the electric heating device, the powders of the materials for the resistive heating film are mixed according to predetermined proportions, to form a slurry mixture. Then, the slurry mixture is coated on the outside surface of the ceramic tube 204. After the slurry mixture is dry by removing water contained in the mixture, the ceramic tube 204 is put into a furnace to be dried for 6 hours under the temperature of 1200°C. A high-temperature endurable conductor 108 is provided at each end of the resistive heating film. Then, the contacts between each conductor and the resistive heating film are covered with aluminum film to make the conductors 108 tightly attach to the resistive heating film and form the electrodes 202. Thus, the manufacture of the film heating tube is completed.

The skilled in the art should understand that the resistive heating film might be made of any other suitable materials through any other suitable procedures, provided that the resultant electric heating device is satisfied with the requirements to the voltage, heating area and power.

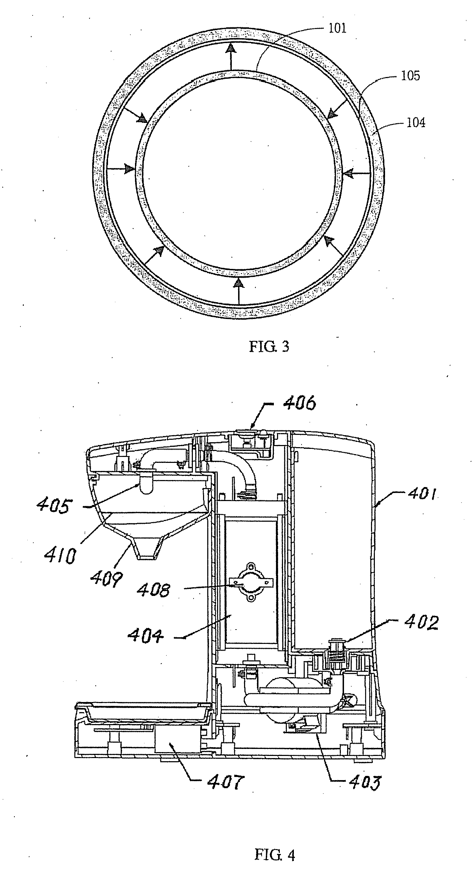

Fig. 3 is an energy flow diagram of the electric heating device of the embodiment of the present invention. The electric heating device generates the two kinds of energy during the operation, including thermal energy generated by the resistive heating film and infra-red energy resulted from the thermal energy. For the sake of clarity, Fig. 3 only illustrates the relevant part of the present invention. During the operation of the electric heating device, the resistive heating film of the film heating tube 101 generates thermal energy. Among the total thermal energy, about 2/3 of the thermal energy is transferred to the liquid contained in the film heating tube 101 along the wall of the film heating tube 101, while about 1/3 of the thermal energy would be radially diffused outwards and then is reflected by the reflective surface 105 back to the film heating tube 101. Thus, the leakage of energy is prevented and the waste of energy is reduced. The ceramic tube of the film heating tube 101 generates radiation under a certain high temperature, which could heat the liquid more efficiently.

Fig. 4 illustrates the structure of the high-speed water heater of the present invention. The water heater comprises a water tank 401 for containing cold water to be boiled, an electric heating device 404 for heating cold water received from the water tank, a water supply system connected between the water tank and the electric heating device for supplying cold water from the water tank to the electric heating device, a water discharge system 405 for discharging boiled water received from the electric heating device, and a control system 407 controlling the operation duration, power, temperature, water flow of the water heater. The water heater further comprises a switch 406 for selectively supplying power from the power source to the electric heating device 404 to enable the operation of the water heater.

The electric heating device 404 is an electric heating device as mentioned above. The water supply system comprises a water pump 403 and a valve 402 connected between the water tank and the water pump. The water pump 403 is used to inject the cold water contained in the water tank 401 into the electric heating device 404 at a predetermined flow rate, to push out the boiled water from the heating device 404.

The operation of the high-speed water heater of the present invention is as follows. When the water container 401 is filled of water, the switch 406 is switched on to supply power to the electric heating device 404. The energy generated by the resistive heating film of the electric heating device 404 would heat water contained within the film heating tube to 100°C rapidly. Then, the control system 407 controls the water pump 403 to inject the cold water contained in the water tank 401 into the heating device at a flow rate of 5-6 ml/s, to push out the boiled water from the heating device 404. The injected cold water would also be heated to 100°C rapidly by the thermal energy and infra-red energy generated by the heating device. Finally, the boiled water is discharged from the water heater by means of the water discharge system. Therefore, within 25-40s, the high-speed water heater of the present invention could discharge 150ml-200ml boiled water. During this period of time, the present water heater only consumes about 0.0115-0.017 kWh of electrical energy. Comparing to the prior water heater with power of 2.5-3kW, the present invention could significantly reduce energy consumption and cost for a long period of time.

For safety, the present water heater could further comprise a thermostat mechanism 408, which may act as a countermeasure when the control system 407 fails to control the water heater. The thermostat mechanism could be any suitable thermostat known in this art.

The water heater of the present invention is suitable for boiling tea or coffee. Thus, it may further comprise a detachable compartment 409 provided under the water discharge system 405. Within the compartment 409, a filter 410, such as nylon filter, could be provided. When the present water heater is used to boil tea or coffee, the tea or coffee is disposed on the filter 410, and then the boiled water discharged from the water discharge system 405 could pass through the filter to boil tea or coffee placed thereon. If needed, an additional filter could be placed above the tea or coffee.

The present invention has been described in detail with reference to the preferred embodiments, whereas, the invention is not limited to that. It should be understood by those skilled in the art that various additional modifications and changes can be made without departing from the spirit and scope of the present invention.

## Claims

1. An electric heating device comprising a container provided with an inlet port and an outlet port and an electric heating element, in which the container is a ceramic tube, and the electric heating element comprises a resistive heating film covering an outside surface of the ceramic tube and two electrode conductors leading from the opposite ends of the resistive heating film respectively, and the ceramic tube and the resistive heating film form a film heating tube, wherein the device further comprises:
an outer tube forming an enclosed space with the ceramic tube, in which an inner surface of the outer tube forms a reflective surface for reflecting all the energy radiated from the film heating tube back to the ceramic tube.

2. The electric heating device according to claim 1, wherein the ceramic tube is made of high-purity ceramics.

3. The electric heating device according to claim 2, wherein two layers of quartz glazed coatings are formed on an inner surface of the ceramic tube.

4. The electric heating device according to claim 3, wherein the quartz glazed coatings have the same sintering temperature and coefficient of thermal expansion as the ceramic tube.

5. The electric heating device according to claim 1, wherein the resistive heating film is comprised of one or more materials selected from aluminum oxide, titanium, cadmium, and nano-carbon.

6. The electric heating device according to claim 1, wherein the reflective surface of the outer tube is a smooth surface of a thin metal sheet attached to the inner surface of the outer tube.

7. The electric heating device according to claim 1, wherein a shock-proof ring is provided between the film heating tube and the outer tube at each end of the film heating tube.

8. The electric heating device according to claim 7, wherein the shock-proof ring is made of an electric insulating material.

9. The electric heating device according to claim 1, wherein the outer tube is made of steel, and the two electrode conductors extend out of the outer tube through respective apertures formed through the wall of the outer tube.

10. The electric heating device according to any one of claims 1 to 9, wherein the device further comprises two leak-proof covers each of which is provided at each end of the film heating tube and has a hole formed therethrough for supplying cold water to or discharging boiled water from the film heating tube, in which the leak-proof covers are made of rubber and are fixed to the outer tube by means of fastening elements, one end of each leak-proof cover is inserted into the film heating tube, and a plurality of leak-proof rings are provided between the inserted end of the leak-proof cover and the film heating tube.

11. A high-speed water heater comprising a water tank for containing cold water to be boiled, an electric heating device for heating the cold water received from the water tank, a water supply system connected between the water tank and the electric heating device for supplying the cold water from the water tank to the electric heating device, a water discharge system for discharging boiled water received from the electric heating device, and a control system for controlling the operation of the water heater, wherein the electric heating device is a device of any one of claims 1 to 10.

12. The high-speed water heater according to claim 11, wherein the water supply system comprises a water pump and a valve connected between the water tank and the water pump, in which the water pump is used to inject the cold water contained in the water tank into the electric heating device at a predetermined flow rate.

13. The high-speed water heater according to claim 12, wherein the predetermined flow rate is a flow rate of 5-6 ml/s.

14. The high-speed water heater according to claim 11, wherein the water heater further comprise a thermostat mechanism acting as a countermeasure when the control system fails to control the operation of the water heater.

15. The high-speed water heater according to claim 11, wherein the water heater further comprise a detachable compartment provided under the water discharge system within which compartment a filter is mounted.
